# EUROPEAN PATENT SPECIFICATION

(11) **EP 0 360 942 B1**
(45) Date of publication and mention of the grant of the patent: **21.07.1993**
(21) Application number: 88310420.0
(22) Date of filing: 04.11.1988
(51) Int. Cl.: H01M 4/68, H01M 4/73

(54) **Conductive ceramic support for active material in a lead-acid storage battery**
Leitfähiger keramischer Träger für das Aktivmaterial eines Bleisäure-Akkumulators
Support céramique conducteur pour matériau actif d'un accumulateur au plomb-acide

(30) Priority: 29.08.1988 US 237064
(43) Date of publication of application: 04.04.1990
(73) Proprietor: ATRAVERDA LIMITED, GB-Ampthill Bedfordshire MK45 2QW (GB)
(72) Inventor: Clarke, Robert L., Orinda, California 94563 (US); Cheng, Jimmy Fong, Fremont, California 94539 (US)
(74) Representative: Shaw, Laurence

(56) References cited:
- EP-A- 0 047 595
- EP-A- 0 191 248
- WO-A-88/05427
- DE-A- 2 714 605
- PATENT ABSTRACTS, vol. 7, no. 62 (E-164)[1207], 15th March 1983; & JP-A-57 210 569 (MATSUSHITA DENKI SANGYO K.K.) 24-12-1982
- PATENT ABSTRACTS OF JAPAN, vol. 9, no. 53 (E-301)[1776], 7th March 1985; & JP-A-59 194 358 (MATSUSHITA DENKI SANGYO K.K.) 05-11-1984
- PATENT ABSTRACTS OF JAPAN, vol. 10, no. 79 (E-391)[2136], 28th March 1986; & JP-A-60 225 362 (NIPPON DENSHIN DENWA KOSHA) 09-11-1985

## Description

This invention relates to a conductive ceramic support for the active materials in a lead acid storage battery and electrodes formed therefrom, which electrodes may be used to construct an improved lead acid battery.

The electroactive material in a lead-acid storage battery, lead dioxide for the positive plate and spongy metallic lead for the negative plate, requires a mechanical framework or support in the battery. The mechanical support is not required for the electrochemical reactions which generate power in the battery, but rather, the support provides a substrate on which the electroactive material is deposited and conducts current to and from the active material. Therefore, the support must be conductive, possess mechanical strength and be corrosion resistant. Commonly, a lead alloy grid is used as a mechanical support for the active material in lead-acid storage batteries.

A serious problem in lead-acid storage batteries is corrosion. The major point of corrosive attack in the battery is the positive battery plate. The lead alloy grid that is commonly used as a support for the positive active material disintegrates due to the reactions occurring during charging of the positive battery plate, as shown by the following equations:

(1) PbSO₄ + 2H₂0 ------> PbO₂ + H₂SO₄ + 2H⁺ + 2e⁻

(2) Pb + 2H₂0 ---------> PbO₂ + 4H⁺ + 4e⁻

Exposed portions of the lead alloy grid rapidly oxidize to lead dioxide according to Equation (2).

In this manner, the lead alloy grid is subjected to electrochemical attack, creep and stress corrosion. Grids of substantial thickness are required to avoid stress corrosion which accelerates mechanical failure of the grid. Although thicker lead grids help to prevent premature mechanical failure, they require more lead and therefore add weight to the battery beyond what is needed for the electrochemical generation of power.

A variety of attempts have been made to address the problem of corrosion of the positive battery plate in lead-acid storage batteries.

The use of lead-covered titanium as a light weight strong grid structure in place of heavier lead grids has been described. J.B. Cotton and I. Dugdale, Batteries (D.H. Collins, ed. Pergamon Press, New York, 1963) p. 197-307. The lead-covered titanium grids failed due to penetration of the lead coating followed by rapid attack on the titanium metal substrate.

Support grids made of nitrided titanium, optionally with gold flashing have also been described. U.S. Patents 3,486,940; 3,499,795; 3,576,674; and 3,615,831. This attempted solution is unsatisfactory because gold flashing would cause oxygen to be evolved from the grid rather than permit charging of the active material. Furthermore, nitrided titanium is probably unstable in the sulfuric acid electrolyte in the battery. No commercial embodiment of this proposed grid support is known.

The use of polymeric fillers in a lead grid support has been proposed in order to increase the mechanical durability of support. R. Thomas, Proceedings of the Third International Conference on Lead, Venice, Pergamon Press, New York, 1970, Paper No. 24. U.S. Patent No. 3,607,421 describes the use of plastic frames onto which the lead is coated to act as the electrical conductor. This attempt fails due to the inability of the polymeric core to conduct current to and from the active material.

Other attempts to solve the corrosion problem include the use of polymer grid supports containing dispersed tin dioxide-coated glass fibers or carbon fibers as conductive material. These systems are unsatisfactory because polymeric material is thermodynamically unstable in the presence of lead IV ions or sulphuric acid electrolytes at electrode potentials above 0.77 volts. Furthermore, tin dioxide is electrochemically vulnerable at the lead cathode because it is reduced to a more soluble stannous sulfate during charging.

None of the aforementioned attempts to solve the problem of corrosion of the support for active material in a lead-acid storage battery has been completely successful. In addition to being corrosion resistant, the support must be light weight, high in mechanical strength, electroconductive, and provide good contact and adhesion to the active material. The choice of material for a support for the active material in a lead-acid storage battery is further restricted by the electrochemical potential required for the battery.

It has been proposed that titanium suboxides be used in the construction of electrodes. In particular, EP-A-0047595 describes the use of titanium suboxides as electrode materials and mentions the possible use of TiOₓ, where x is from 1.55-1.95, in batteries generally. Lead-acid batteries and support for the active material therein are not discussed. Also, WO-A-88/05427 describes the preparation of titanium suboxides having an intercalant such as copper or nickel therein, formed by reacting titanium dioxide with intercalated graphite under reducing conditions. The compounds so formed are said to be corrosion resistant and useful in electrochemical applications. 'Battery plates' are mentioned, but no details as to how such a 'battery plate' might be configured is provided.

### SUMMARY OF THE INVENTION

Therefore, an object of the present invention is to provide an improved conductive support for active material in lead-acid storage battery. A further object of the invention to provide a support which permits a lighter weight battery than conventional batteries with lead alloy grids. A still further object of the invention is to provide a support for active material which is corrosion resistant and maintains its mechanical strength under the conditions prevalent at the positive plate of the lead-acid storage battery. Another object is to provide a conductive support for active material which will permit configurations having enhanced surface contact of the lead oxide active material with the conductive support in order to attain efficient charge/discharge cycling and a high overpotential for hydrogen and oxygen evolution.

It is also an object of the present invention to provide an electrode for a lead-acid storage battery which utilizes a conductive support and a lead oxide paste active material. A further object is to provide such an electrode which is easily manufactured, rapidly charged and discharged, capable of high performance rates, and exhibits a high overpotential for hydrogen and oxygen evolution.

These and further objects of the present invention will become more apparent to those of ordinary skill in the art with reference to the detailed description of the invention, and figures below.

The present invention thus provides a conductive ceramic support for active material in a lead-acid storage battery, the support being made from substoichiometric titanium oxide of the formula, TiOₓ, where x is a number from 1.55 to 1.95. The substoichiometric titania support is electroconductive, lighter than lead, and corrosion resistant. The corrosion resistance permits configurations of the substoichiometric titania support which provide a large surface area in contact with the active material which forms the electrode.

In the preferred embodiment of the conductive ceramic support according to the invention, the substoichiometric titanium oxide is provided in the form of a plate having two substantially flat surfaces and a honeycomb structure. The honeycomb structure has regular and repeating cells to create voids in the plate which communicate through the two substantially flat surfaces of the plate. In the most preferred embodiment of the invention, the conductive ceramic support is extruded in honeycomb form from a green titanium dioxide composite, followed by reduction to form the substoichiometric titanium oxide of the formula, TiOₓ, where x is a number in the region of 1.55 to 1.95.

The honeycomb structure of the conductive ceramic support holds the active material securely on the support and provides a large surface in contact with the active material. This enhanced contact and the beneficial hydrogen and oxygen overpotential properties of the substoichiometric titanium oxide results in efficient charge/discharge of the battery and reduces the amount of gas evolved in the electrochemical reactions taking place on the electrode. The conductive ceramic support may be coated with lead to improve conductivity at the interface of the active material and the support and also to improve adhesion of the active material to the support. The lead oxide paste, which is ultimately converted into the active material for the positive electrode, is mechanically applied to the conductive ceramic support.

The present invention also provides a supported electrode for the lead-acid storage battery system which can be used as either a positive or negative electrode, or as a bipolar electrode comprising both positive and negative electrodes. The electrode comprises: a) a conductive ceramic support for active material made from substoichiometric titanium oxide of the formula, TiOₓ, where x is a number from 1.55 to 1.95; and b) an active material formed from a paste comprising lead oxide, sulfuric acid and water. The active material may be lead dioxide positive or spongy lead negative active material.

The use of a conductive ceramic material as a support according to the invention is clearly distinct from the use of the conductive ceramic material itself, uncoated or coated with an electrocatalytically active composition, as the electrode. While the lead oxide active material is actually a reactant in the charge/discharge reactions taking place in the lead-acid storage battery, the conductive ceramic support merely provides a substrate for the active material. The electrocatalytic coatings of the prior art are catalytic compositions which are not stoichiometric reactants in the particular electrochemical reaction of interest.

### BRIEF DESCRIPTION OF THE DRAWINGS

The invention is described in greater detail below with reference to the attached Figures, wherein;
FIGURE 1 is a cut-away view of a lead-acid storage battery of the prior art;
FIGURE 2 is a perspective view of the conductive ceramic material formed in the shape of a honeycomb;
FIGURE 3 is a discharge curve for a ceramic support according to Example 1;
FIGURE 4 is the bipolar unit which forms the fundamental element of the preferred battery structure of the invention;
FIGURE 5 is a side view of an assembled battery;
FIGURE 6 is a top view of the battery of FIGURE 5; and
FIGURE 7 is a perspective view of an assembled battery without the case.

### DETAILED DESCRIPTION OF THE INVENTION

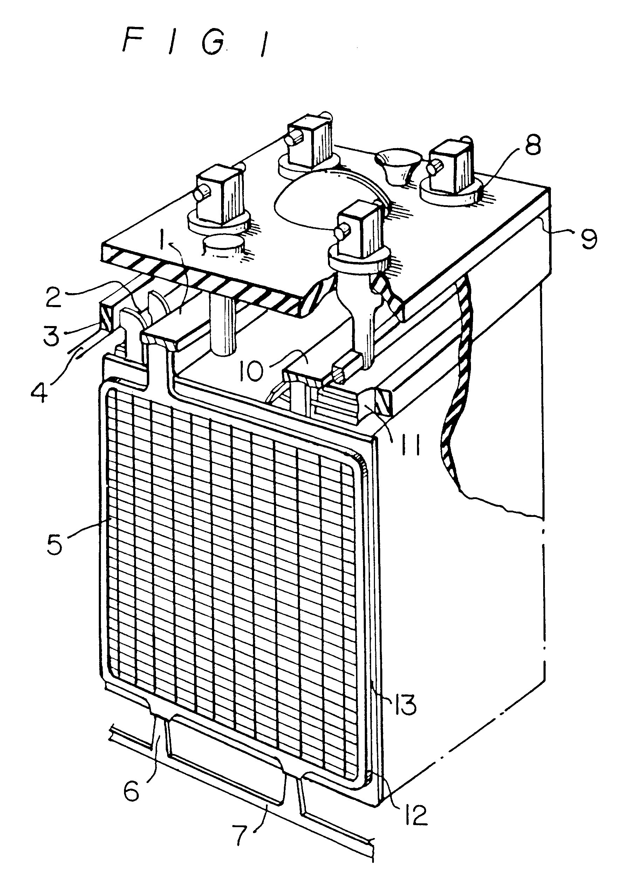

Figure 1 shows a typical prior art lead acid battery in perspective cut-away view. The active material of the battery is carried on flat plates 5, which plates are commonly made from lead antimony or calcium lead alloy. Lead plates 5 are connected in groups with a heavy alloy bus bar 1 for the positive plates or anodes and bus bar 10 for the lead filled cathodes or negative plates. Porous separators allow access of electrolyte to the active material but prevent electrical short circuits by physical separation of the positive and negative plates. A separator such as separator 13 is inserted between each plate.

Still referring to Figure 1, cell walls are positioned between each group of plates to provide an increase in voltage by allowing the groups to operate in a series of independent cells. The battery has a case cover 9 and includes a position plate support hook 2, a plastic positive plate hanger 3 and a plastic jar wall ledge 4. The prior art battery is designed to allow a gas space above the cells and mud space at the bottom of the battery. Supports 6 positioned on plastic supporting bottom 7 form the mud space. The bus bars 1 and 10 are connected to battery posts 8.

Behind negative plate 5 is separator 13, and positive plate 12 completes the first cell in the battery.

Typical storage batteries as shown in Figure 1, with large lead structures used to carry the current and hold the active material in place maybe be contrasted with the bipolar battery constructed from a ceramic honeycomb support structure of the present invention.

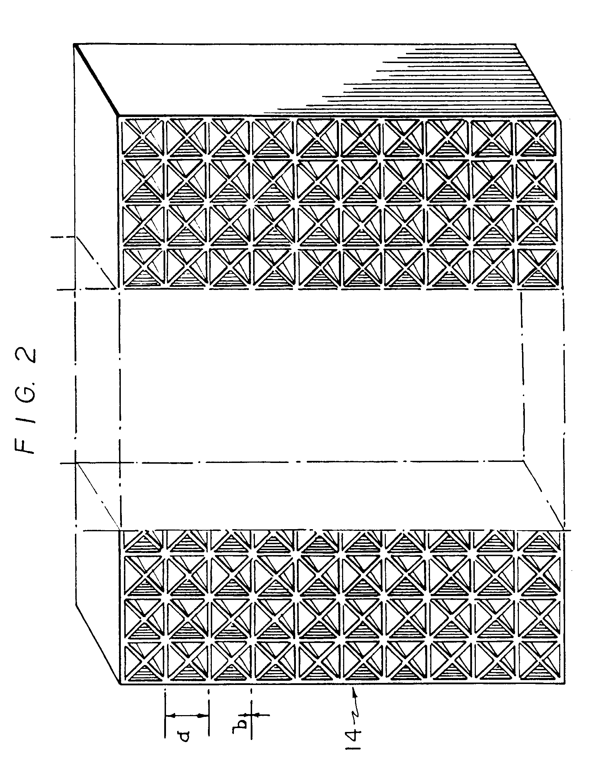

Thus, Figure 2 shows an enlarged perspective view of honeycomb structure 14 of the battery support of the present invention as formed from substoichiometric titanium oxide. In Figure 2, "a" is referred to as the cell length, and "b" is the wall thickness of the structure. The structure 14, as further described below, is formed by extrusion of titanium and subsequent conversion to magneli phase oxides.

The ultimate battery dimensions will necessarily depend on the overall size (height v. width) of the honeycomb structure used in a battery incorporating such a structure. Of course, the honeycomb pattern is uniform across the face of the structure, the space left blank in in Figure 2 merely indicating that the structure may vary in size.

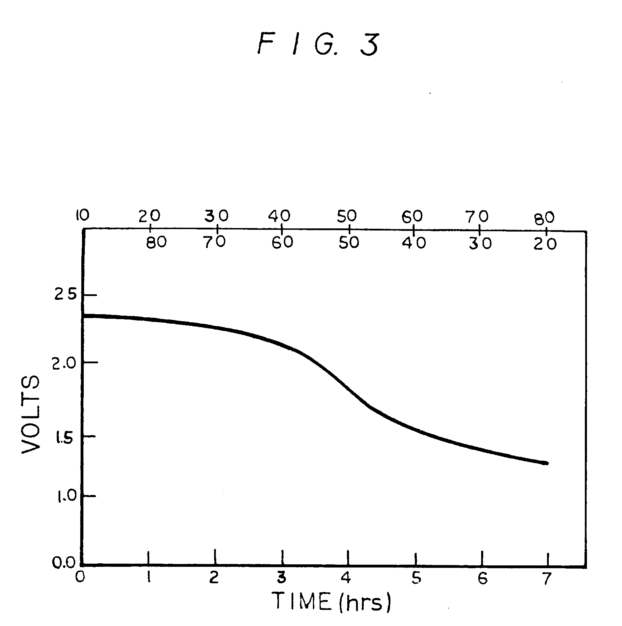

Figure 3 shows the discharge curve for a monopole cell with two plates of substoichiometric titania pasted with lead according to Example 1, each plate having a theoretical maximum capacity of 13,000 coulombs (3.6 amp-hours) connected across a 10 ohm resistor for seven hours, as further discussed below.

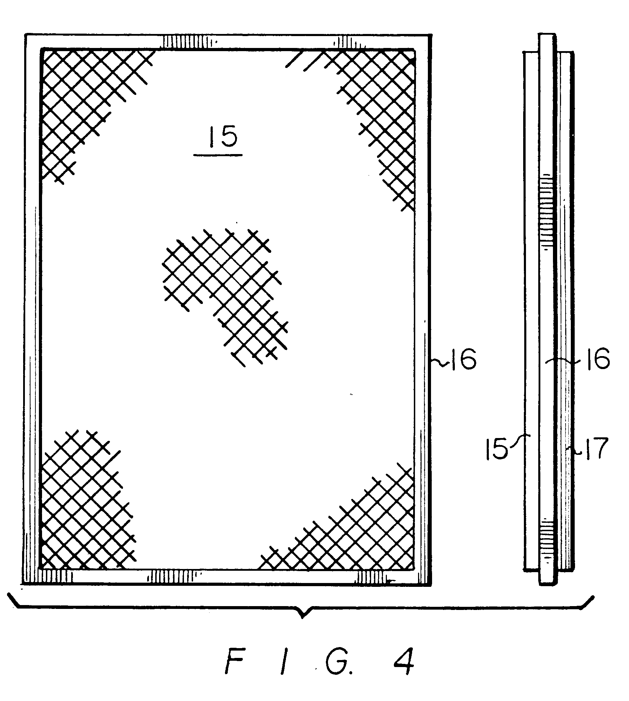

FIGURE 4 shows a face and, separately, a side view of the bipolar unit that is the fundamental lead acid battery element. In the face view of Figure 4, cross-hatched area 15 is a thin section of the honeycomb structure shown in Figure 2. The same reference numbers are used to indicate these elements in the side view of Figure 4. Thus, the bipolar unit comprises a raised honeycomb like section 15 which is pasted with lead oxide/sulphuric acid paste in much the same way as a lead grid is converted to an active battery grid in a conventional battery. Separator 16 is a non-permeable ceramic which is physically attached to the honeycomb section 15. Likewise, separator 16 is physically attached to a second honeycomb unit 17. Honeycomb 17 is pasted, however, with a negative plate forming spongy lead material. This structure can advantageously be formed as a unit in a single piece, with the honeycomb Sections 15 and 17 being embossed onto the sides of separator 16. All pieces 15, 16 and 17 will thus be formed from the same ceramic material.

Thus, the overall structure of Figure 4 is a bipole which is electrochemically active with an anode 15 on a first side and cathode 17 on the other side of non-permeable ceramic separator 16.

Separator 16 forms the conductive cell wall between the active material of the anode in one cell and the active material of the cathode in an adjacent cell, when the bipole unit is assembled to form a battery. In effect, separator 17 is the intercell connector and at the same time a cell divider. In this structure honeycomb units 15 and 17 provide a support network for the active material of the battery and aid current distribution between the active material and separator 16.

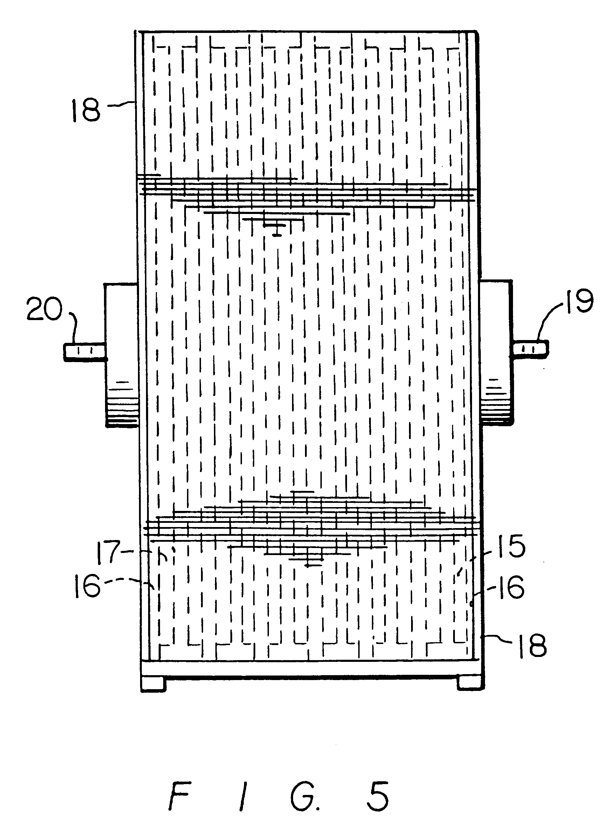

FIGURE 5 shows a side view of five bipolar units (such as are shown in the side view of Figure 4) assembled into a battery. In Figure 5, case 18 now houses five bipolar units which are shown by dashed lines within the case. As can be seen, connectors 19 and 20 are arranged on opposite sides of the battery, each connector being electrically in contact with a monopole unit within the housing. Each monopole unit is constructed of a ceramic separator plate 16, this separator having attached to it a pasted honeycomb unit 17 (forming a negative plate) or 15 (forming a positive plate).

Thus, connector 20 would be the negative terminal of the battery, while connector 19 would be the positive terminal of the battery.

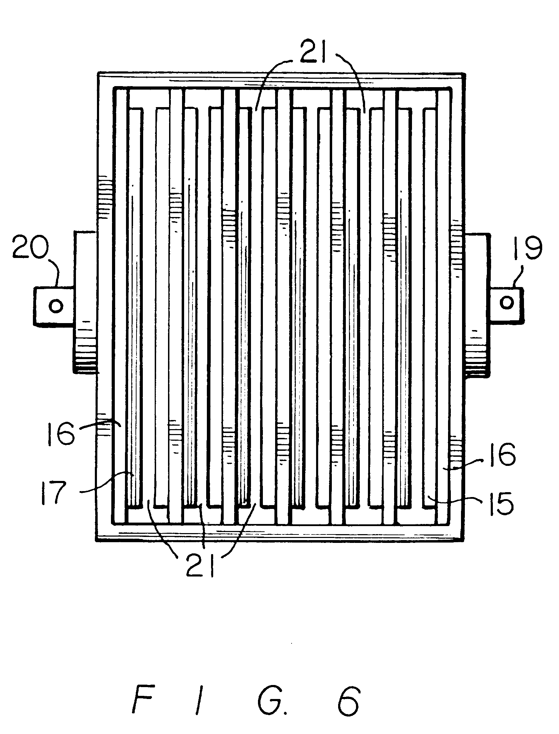

FIGURE 6 is a top view of the battery of Figure 5 which is shown without a cover for clarity. It may be noted that case 18 may be prefabricated from polypropylene and the connectors 20 and 19 sealed in place. Alternatively, case 18 maybe injection molded around pre-assembled battery components.

In FIGURE 6, spaces 21 would be filled with electrolyte solution, for example with an appropriate sulphuric acid solution.

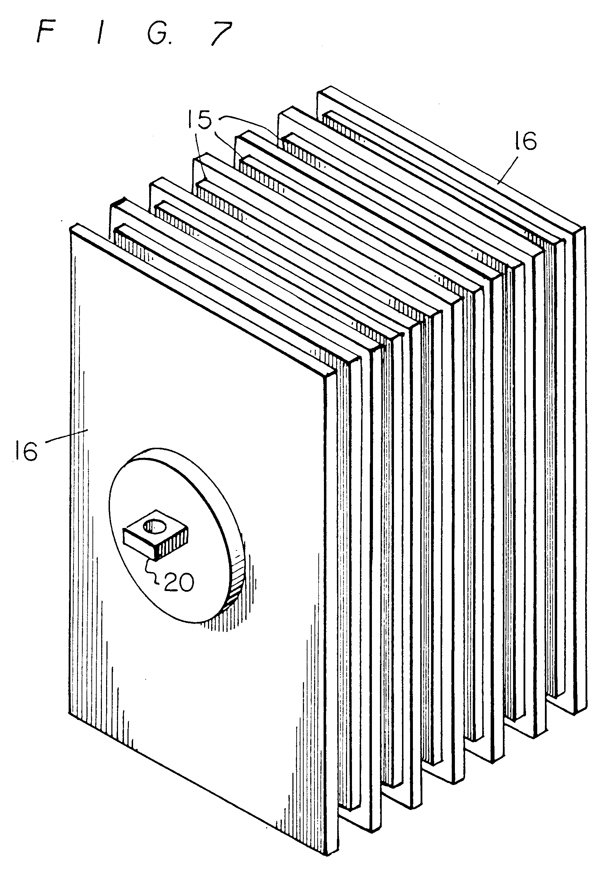

FIGURE 7 is a perspective view of an assembly of bipoles and monopolar end plates shown in perspective view for clarity. It will be clear from Figure 7 that any number of bipoles may be included in this type of battery, either more or fewer than shown, so as to vary the voltage of the battery.

### The Conductive Ceramic Support

The substoichiometric titanium oxide of the formula TiOₓ wherein x is a number from 1.55 to 1.95, which comprises the conductive ceramic supports of the present invention is described in U.S. Patent No. 4,422,917. Generally, substoichiometric titania is obtained by carefully reducing TiO₂ in a non-oxidizing atmosphere at a temperature in excess of 1000°C. The method for preparing the preferred conductive ceramic support having a honeycomb structure is described in greater detail below.

The ability of the conductive ceramic support to adhere mechanically to the lead oxide paste is critical to achieving a lead-acid storage battery which has the necessary performance characteristics, as well as a sufficient lifetime to make the battery commercially useful. Several options for this mechanical adherence have been considered.

The surface of the conductive ceramic support may be coated with lead before applying lead oxide paste to the conductive ceramic support. The lead coating improves adhesion of the active material as well as the conductivity across the ceramic-active material interface. Antimony may be incorporated in the lead coating.

In the preferred embodiment, the conductive ceramic support is provided in the form of a plate having a honeycomb structure. For clarity, the term "pore" is used herein to refer to minute interstices in the surface of the conductive ceramic support, while the term "void" is used to refer to the open space defined by the cells of the honeycomb structure. This honeycomb structure has voids which traverse the thickness of the plate and permit packing of the lead oxide paste in the cells.

In the experiment described below in Example 1, a conductive ceramic support having a honeycomb structure with the following characteristics was used. The cell length ("a" in Figure 2) is 0.100" (2.5 mm); the wall thickness ("b" in Figure 2) is 0.010" (0.25 mm). The maximum distance from the cell wall to any point in the voids is measured at 0.020" (0.5 mm). The skeletal density, measured in terms of solids only, no pores or voids, is 4.28 g/cm³. The structural density, measuring solids and pores, but no voids, is 3.22 g/cm³. The density calculated to include solid, pores and voids is 1.38 g/cm³. As a percentage, the honeycomb structure is defined as 32% solid conductive ceramic, 17% small pores and 51% large voids. The measured resistivity for a typical sample is 20 mOhm-cm.

The honeycomb structure is produced by an extrusion process which is carried out before the substoichiometric titania is actually formed. In this preferred embodiment, the titanium dioxide composite called the "green state", is first extruded to create the honeycomb structure with regular repeating cells. The extruded titanium dioxide is then vitrified and reduced with hydrogen to obtain TiOₓ, where x is a number from 1.55 to 1.95. In this process the honeycomb supports can be formed by embossing the extruded material so as to form a unitary support having two honeycomb faces and a separating plate, as shown in Figure 4.

Alternative routes to the formation of TiOₓ, such as those disclosed in U.S. Patent 4,422,917, are possible. These alternative methods include the use of reductants other than hydrogen, such as carbon monoxide or ammonia. Other methods include dispersing a reducdant, such as titanium metal powder, carbon, lower oxides of titanium, silicon or titanium nitride, in the titanium dioxide and then heating the mixture in a non-oxidizing atmosphere to form TiOₓ.

Further embodiments of the invention include the use of dopants, such as tantalum oxide, tin dioxide, lead oxides, antimony oxides or bismuth oxide, to improve the conductivity of the ceramic-active material interface, reduce passivation, improve adhesion and lower the electrical resistance.

### Active Material

There are a multitude of lead paste formulations used by battery manufacturers, some of them being proprietary. These formulations vary with respect to ease of application, adherence, dimensional performance and cycle life. Careful control of mixing, curing and drying conditions is of the utmost importance. In the preferred embodiment of the electrode according to the invention, the paste is made from gray oxide (65 wt. % PbO, 35 wt. % Pb), deionized water, and 50% sulfuric acid. The paste which is used to form the negative electrode contains certain organic compounds and a small amount of BaS0₄ to improve charge/discharge cycling characteristics. Of course, small variations in water and acid content can be made to improve paste adherence to the conductive ceramic surface.

Typical conditions for mixing, curing and drying the resin are described in K.V. Kordesch, Batteries: Lead-Acid Batteries and Electric Vehicles. In the preferred embodiment, the gray oxide powder is first mixed with water, following by the addition of sulfuric acid. The resulting mixture hardened into a crumbly mass, which can be softened to a stiff paste by working with a mortar and pestle. Additional water is added to the stiff paste to yield a softer consistency. The resulting paste is then pressed onto the conductive ceramic support using a knife.

Experiments have shown that the water and acid content of the lead paste have a significant effect on the adherence of the lead oxide paste to the conductive ceramic support. Too much acid, or too little water, results in a paste that does not adhere well to the conductive ceramic support while the paste is still wet. Too much water, or too little acid results in a thin paste that cracks and falls away from the conductive ceramic support.

It also has been found that the preparation of the surface of the conductive ceramic support is important to obtaining good adherence of the lead oxide paste formulation to the conductive ceramic support. Completely dry TiOₓ draws the moisture out of the paste before it adheres completely. Soaking the conductive ceramic support in either water or acids gives inconsistent results.

Once the lead oxide paste has been applied to the conductive ceramic, it is necessary to convert the paste to the active materials Pb and PbO₂. This conversion is accomplished by polarizing the plates in dilute (about 10 wt.%) sulfuric acid. This process is known in the art as "formation".

### EXAMPLE 1

Conductive ceramic supports made of substoichiometric titanium oxide (TiOₓ, x = 1.75) were formed in the shape of two plates having a honeycomb structure with regular cell voids as shown in Figure 2. Each plate was about 6 mm thick and each face of the plates had an area of about 13 cm². The properties of the conduct ceramic plates were as follows:

| | |
|---|---|
| Cell length: | 0.100 inches = 2.5 mm |
| Wall thickness: | 0.010 inches = 0.25 mm |
| Maximum distance from cell wall to point in voids: | 0.020 inches = 0.5 mm |
| Skeletal density (solid only, no pores or voids): | 4.28 g/cm³ |
| Structure density (solid and pores, no voids): | 3.22 g/cm³ |
| Density (solid, pores and voids): | 1.38 g/cm³ |
| Solid titania: | 32% |
| Small pores: | 17% |
| Large voids: | 51% |
| Resistivity: | 20 mOhm-cm avg. on one sample. |

Each of the plates was pasted with lead oxide. The paste was pressed into the voids and applied flush on one side of each piece, and allowed to protrude in a layer about 3 mm thick on the other. Each piece held 15 g of paste, giving them a theoretical capacity of 13,000 coulombs.

The pieces were cured at 100% humidity for 1 day at 30°C and 1 day at 50°C. They were then dried in an oven for 2 hours at room temperature, 2 hours at 30°C, 2 hours at 50°C, and 1 hour at 100°C.

Through the pasting, curing and drying processes, the lead oxide paste looked very good. The paste pressed into the pores quite easily, and did not crack or fall off at all during curing and drying.

The pieces were assembled in a beaker into a monopole cell, with 10% H₂SO₄ as electrolyte. The heavily pasted side of each faced the center, and were separated by a 3.5 cm gap.

The cell was then polarized for formation of the active materials. After 1 day at 150 mA (about 1.5 volts), the negative (-) plate had already formed gray spongy lead, and the positive (+) plate showed some black PbO₂. After 1 more day at 200 mA (about 2.6 volts), both plates appeared completely charged. The active material was completely intact on both plates, and showed no signs of shedding.

The electrolyte was changed to 30% H₂SO₄ and the cell was discharged across a 10 ohm load. The cell voltage was 2.14 volts on open circuit, and dropped to 1.9 volts when the load was applied. The plates showed some gassing, and delivered 0.18 amps quite steadily for about one hour. The results are shown in TABLE I below.

**TABLE I**

| Time | Volts | Amps | Coulombs Out | % Return |
|---|---|---|---|---|
| 0 hr | 2.14 | 0.00 | 0 | 0 |
| 0 | 1.85 | 0.18 | 0 | 0 |
| 1 | 1.82 | 0.18 | 648 | 5.0 |
| 2 | 1.75 | 0.17 | 1280 | 9.8 |
| 3 | 1.65 | 0.16 | 1870 | 14.4 |
| 4 | 1.25 | 0.12 | 2380 | 18.3 |
| 5 | 1.00 | 0.10 | 2770 | 21.3 |
| 6 | 0.85 | 0.08 | 3100 | 23.9 |
| 7 | 0.75 | 0.07 | 3380 | 26.0 |

The voltage dropped very slowly for the first 3 hours, and dropped faster thereafter. After 5 hours, the voltage had dropped to 1.0 volts, and 21.3% of the theoretical charge had been returned. The paste was still intact and showed no shedding. The discharge curve is shown in Figure 3.

The cell was recharged for 1 day at 150 mA until it was gassing freely and then discharged by short circuiting for 3 hours. The results are shown in TABLE II below.

**TABLE II**

| Time | Amps | Coulombs Out | % Return |
|---|---|---|---|
| 0 min | 1.4 | 0 | 0% |
| 1 | 1.2 | 78 | 0.6 |
| 2 | 1.16 | 149 | 1.1 |
| 3 | 1.13 | 218 | 1.7 |
| 4 | 1.10 | 284 | 2.2 |
| 5 | 1.09 | 350 | 2.7 |
| 6 | 1.09 | 416 | 3.2 |
| 7 | 1.09 | 481 | 3.7 |
| 8 | 1.06 | 545 | 4.2 |
| 9 | 1.05 | 609 | 4.7 |
| 10 | 1.04 | 671 | 5.2 |
| 20 | 0.95 | 1268 | 9.8 |
| 30 | 0.84 | 1804 | 13.9 |
| 40 | 0.74 | 2281 | 17.5 |
| 50 | 0.61 | 2725 | 21.0 |
| 60 | 0.50 | 3058 | 23.5 |
| 120 | 0.20 | 4318 | 33.2 |
| 180 | 0.09 | 4840 | 37.2 |

The active material showed much gassing, but extremely little degradation during discharge by short circuiting.

The honeycomb structure of the substoichiometric titanium (TiOₓ) plates provides good mechanical support for the lead paste. The lead-acid storage battery made with lead pasted conductive ceramic support plates made of TiOₓ in the shape of a honeycomb charges quite well, and also shows promising discharge performance.

While a particularly preferred support and electrode structure have been described, those skilled in the art will recognize that many variations which use the princles of the invention and achieve the advantages thereof can be derived from these descriptions. These variations are intended to fall within the scope of the invention and the appended claims.

## Claims

1. A conductive ceramic support for active material in a lead-acid storage battery, said conductive ceramic support comprising substoichiometric titanium oxide of the formula, TiOₓ, where x is a number from 1.55 to 1.95, and being in the form of a plate having two substantially flat surfaces and a honeycomb structure with regular and repeating cells to create voids in said plate, said voids communicating through each of said two substantially flat surfaces.

2. A conductive ceramic support according to claim 1, wherein said conductive ceramic support is prepared by extruding a green titanium dioxide composite to form said honeycomb structure and thereafter vitrifying and reducing said green titanium dioxide to form said substoichiometric titanium oxide.

3. A conductive ceramic support according to claim 1 wherein said substoichiometric titanium oxide is coated with lead.

4. An electrode in a lead-acid storage battery comprising:
a) a conductive ceramic support for active material, said conductive ceramic support being made from substoichiometric titanium oxide of the formula, TiOₓ, where x is a number from 1.55 to 1.95; and
b) an active material deposited on said conductive ceramic support, said active material being formed from a paste comprising lead oxide, sulfuric acid and water
wherein said conductive ceramic support is in the form of a plate having two substantially flat surfaces and a honeycomb structure with regular and repeating cells to create voids in said plate, said voids communicating through each of said two substantially flat surfaces.

5. An electrode according to claim 4, wherein said active material is lead dioxide, and the electrode is used as a positive electrode.

6. An electrode according to claim 4, wherein said active material is spongy lead, and the electrode is used as a negative electrode.

## Patentansprüche

1. Leitfähiger keramischer Träger für aktives Material in einer Blei-Säure-Speicherbatterie, wobei der leitfähige keramische Träger aus unterstöchiometrischem Titanoxid der Formel TiOₓ, wobei x eine Zahl von 1,55 bis 1,95 ist, hergestellt ist und die Form einer Platte hat mit zwei im wesentlichen ebenen Oberflächen und einer Wabenstruktur mit regelmäßigen und sich wiederholenden Waben, um Hohlräume in der Platte zu erzeugen, wobei die Hohlräume durch jede der zwei im wesentlichen ebenen Flächen kommunizeren.

2. Leitfähiger keramischer Träger nach Anspruch 1,
in welchem der leitfähige keramische Träger durch Extrudieren einer ungetemperten bzw. grünen Titandioxidzusammensetzung zum Bilden der Wabenstruktur und danach Sintern und Reduzieren des grünen Titandioxids zum Bilden des unterstöchiometrischen Titanoxids hergestellt ist.

3. Leitfähiger keramischer Träger nach Anspruch 1,
in welchem das unterstöchiometrische Titanoxid mit Blei beschichtet ist.

4. Elektrode in einer Blei-Säure-Speicherbatterie mit
a) einem leitfähigen keramischen Träger für das aktive Material, wobei der leitfähige keramische Träger aus unterstöchiometrischem Titanoxid der Formel TiOₓ, wobei x eine Zahl von 1,55 bis 1,95 ist, hergestellt ist und
b) ein aktives Material auf dem leitfähigen keramischen Träger abgeschieden ist, wobei das aktive Material aus einer Bleioxid, Schwefelsäure und Wasser enthaltenden Paste gebildet ist, wobei der leitfähige keramische Träger die Form einer Platte hat mit zwei im wesentlichen ebenen Oberflächen und einer Wabenstruktur mit regelmäßigen, sich wiederholenden Waben, um Hohlräume in der Platte zu bilden, wobei die Hohlräume durch jede der zwei im wesentlichen ebenen Oberflächen kommunizieren.

5. Elektrode nach Anspruch 4,
in welcher das aktive Material Bleidioxid ist und die Elektrode als positive Elektrode verwendet wird.

6. Elektrode nach Anspruch 4,
in welcher das aktive Material Bleischwamm ist und die Elektrode als negative Elektrode verwendet wird.

## Revendications

1. Support céramique conducteur pour une matière active dans une batterie d'accumulateurs à plomb-acide, ledit support céramique conducteur étant formé d'oxyde de titane sous-stoechiométrique de la formule TiOₓ, où x est un nombre de 1,55 à 1,95, et étant sous la forme d'une plaque ayant deux surfaces sensiblement plates et une structure en nid d'abeilles avec des cellules régulières et répétitives pour former les espaces vides dans ladite plaque, lesdits espaces vides communiquant à travers chacune desdites deux surfaces sensiblement plates.

2. Support céramique conducteur selon la revendication 1, qui est préparé par extrusion d'un composite de dioxyde de titane vert pour former ladite structure en nid d'abeilles et, ensuite, vitrification et réduction dudit dioxyde de titane vert pour former ledit oxyde de titane sous-stoechiométrique.

3. Support céramique conducteur selon la revendication 1, dans lequel ledit oxyde de titane sous-stoechiométrique est revêtu de plomb.

4. Electrode dans une batterie d'accumulateurs à plomb-acide, comportant :
a) un support céramique conducteur pour une matière active, ledit support céramique conducteur étant formé d' oxyde de titane sous-stoechiométrique de la formule TiOₓ, où x est un nombre de 1,55 à 1,95 ; et
b) une matière active déposée sur ledit support céramique conducteur, ladite matière active étant formée à partir d'une pâte comprenant de l'oxyde de plomb, de l'acide sulfurique et de l'eau,
dans laquelle ledit support céramique conducteur se présente sous la forme d'une plaque ayant deux surfaces sensiblement plates et une structure en nid d'abeilles présentant des cellules régulières et répétitives pour former des espaces vides dans ladite plaque, lesdits espaces vides communiquant à travers chacune desdites deux surfaces sensiblement plates.

5. Electrode selon la revendication 4, dans laquelle ladite matière active est du dioxyde de plomb, et l'électrode est utilisée en tant qu'électrode positive.

6. Electrode selon la revendication 4, dans laquelle ladite matière active est du plomb spongieux, et l'électrode est utilisée en tant qu'électrode négative.
